Europäisches Patentamt

European Patent Office

Office européen des brevets

(19)

(11) Veröffentlichungsnummer: **0 407 805 A1**

## (12) EUROPÄISCHE PATENTANMELDUNG

(21) Anmeldenummer: **90112106.1**

(22) Anmeldetag: **26.06.90**

(51) Int. Cl.⁵: **A61C 9/00**

Die Bezeichnung der Erfindung wurde geändert (Richtlinien für die Prüfung im EPA, A-III, 7.3).

(30) Priorität: **28.06.89 DE 3921137**
**18.08.89 DE 3927256**
**18.01.90 DE 4001310**
**16.03.90 DE 4008457**

(43) Veröffentlichungstag der Anmeldung:
**16.01.91 Patentblatt 91/03**

(84) Benannte Vertragsstaaten:
**AT BE CH DE DK ES FR GB GR IT LI LU NL SE**

(71) Anmelder: **Schreiber, Hans, Dr. Dr.**
**Keplerstrasse 28**
**D-6800 Mannheim 1(DE)**

(72) Erfinder: **Schreiber, Hans, Dr. Dr.**
**Keplerstrasse 28**
**D-6800 Mannheim 1(DE)**

(74) Vertreter: **Ratzel, Gerhard, Dr.**
**Seckenheimer Strasse 36a**
**D-6800 Mannheim 1(DE)**

(54) **Verfahren und Vorrichtung zum Mischen, insbesondere zahnärztlicher Abdruckmaterialien.**

(57) Die Erfindung betrifft ein Verfahren und eine Vorrichtung zum Mischen, insbesondere zahnärztlicher Abdruckmaterialien, bestehend aus wenigstens zwei Materialkomponenten (3,4), wie Silikon oder dergleichen mit Härter oder Katalysatoren und zum Applizieren des Abdruckmaterials im Patientenmund, bei der die Applikationseinheit (1) zugleich als Misch- und Spritzenkörper fungiert, die einerseits die Materialkompononenten getrennt in Karpulen (2) aufnimmt und unter Aufhebung der Trennwirkung diese unter Rotation mittels Rotationseinrichtung (50) vermischt, und andererseits die Komponenten in die Applikationseinheit getrennt zuführbar sind (22) und in dieser unter Rotation vermischt werden, so daß jeweils eine geringst möglichste Zeitspanne zwischen Vermischung der Materialkomponenten und Applikation im Patientenmund erreicht wird.

Fig.32

EP 0 407 805 A1

# VERFAHREN UND VORRICHTUNG ZUM MISCHEN, INSBESONDERE ZAHNÄRZTLICHER ABDRUCKMATE-RIALIEN, BESTEHEND AUS WENIGSTENS ZWEI MATERIALKOMPONENTEN, WIE SILIKONE ODER DER-GLEICHEN MIT HÄRTER ODER KATALYSATOREN

Die Erfindung betrifft ein Verfahren und eine Vorrichtung zum Mischen, insbesondere zahnärztlicher Abdruckmaterialien, bestehend aus wenigstens zwei Materialkomponenten, wie Silikone oder dergleichen mit Härter oder Katalysatoren.

Beim Herstellen einer prothetischen Arbeit, insbesondere in der Kronen- und Brückentechnik, aber auch in der Totalprothetik und der konservierenden Zahnheilkunde bildet die Modellherstellung nach Abdrucknahme der Kiefersituation einen wesentlichen Bestandteil.

Ein so gewonnenes Arbeitsmodell ist mit die wichtigste Grundlage für das Gelingen einer Arbeit im zahntechnischen Labor. Neben hochwertigen Modellgipsen, die nahezu expansionsfrei aushärten, bildet die dimensionsgetreue Abdrucknahme der Kiefersituation einen wesentlichen Bestandteil in einem oft langwierigen Herstellungsprozeß.

Natürlich müssen auch hier die verwendeten Abdruckmaterialien gewisse Voraussetzungen erfüllen, die mit Begriffen wie Präzession, Handhabung, zeitliche Dimensionsänderung, Wasserverlust oder -aufnahme, Aufbewahrung und dergleichen zu umschreiben sind.

Gerade die leichte Handhabung und die problemlose Aufbewahrung verbunden mit hoher Präzession haben in den letzten Jahren in zunehmendem Maße die Silikone in den Vordergrund des Interesses gerückt. Bei diesen sind neben chemischen Unterschieden Konsistenz- oder Viskositätsmerkmale für die Auswahl des richtigen Mittels entscheidend.

Auch die Abdrucknahme selbst wird von verschiedenen Behandlern auf verschiedene Art und Weise durchgeführt. So gibt es den sogenannten Einphasenabdruck, den Doppel-Mischabdruck, den Korrekturabdruck oder den Ergänzungsabdruck, um Abdruckmethoden mit Silikonen zu benennen.

Gerade die Kombination mit hochviskosen, knetbaren und dünnflüssigen Abdruckmaterialien, die aufeinander abgestimmt sind, ist in zahnärztlichen Praxen weit verbreitet.

Silikone binden durch Polymerisation unter Vernetzung ab. Im herkömmlichen Sprachgebrauch wird das katalysierende System des Abbindevorganges als Härter bezeichnet, der normalerweise in Pastenform oder flüssig zur Verfügung steht.

Praktisch wird dabei die knetbare Abdruckmasse mit dem Härter von einer Helferin oder dem Zahnarzt von Hand gemischt, die dünnflüssigen Abdruckmaterialien auf Anmischblocks mit Härterpaste oder -Flüssigkeit durch einen Anrührspatel in innige Verbindung gebracht.

Es ist selbstverständlich, daß mit dem Kontakt von Abdruckmaterial und Härter der Polymerisationsprozeß beginnt, so daß es wünschenswert ist, in möglichst kurzer Zeit eine optimale Mischung herzustellen und im Munde des Patienten zu applizieren, so daß frühzeitig entstehende elastische Rückstellkräfte, die bei Entfernen des Abdrucklöffels zu Verziehungen führen, weitgehend vermieden werden können.

Es ist darüberhinaus nachzutragen, daß bei der Kronen- und Brückentechnik der Übergang vom Zahn zum Zahnfleisch durch eine oft nicht zu umgehende Traumatisierung des Weichgewebes bei der Präparation und eine damit verbundene Blutung ein schnelles Arbeiten, d.h. ein schnelles Applizieren besonders der dünnflüssigen Silikonmasse erforderlich macht.

Auch der Speichelfluß, insbesondere im Bereich des Unterkiefers, macht sich dabei in relativer Weise bemerkbar.

Zur Beschleunigung des Anmischvorganges wurden in letzter Zeit Kartuschensysteme und Mischgeräte auf den Markt gebracht, die es ermöglichen sollen, den Anmischvorgang zu verkürzen und dabei zu optimieren.

Es bleibt jedoch zu bemängeln, daß die Zeitspanne zwischen Mischvorgang und Applikation speziell der dünnflüssigen Massen vielfach immer noch zu lange dauert und damit der Abdruck u.a. durch Nachblutung oder Speichelbenetzung der vorliegenden Präparation ungenau wird, so daß in sehr großer Zahl zum Teil mehrere Wiederholungen des Abdruckvorganges notwendig sind.

Beim praktischen Arbeiten zeigt sich, daß gerade die Applikation der dünnflüssigen Silikonmasse der eigentlich problematische Teil ist, der darüberhinaus mit der Notwendigkeit der Trockenhaltung des Präparationsgebietes zum Teil die Zusammenarbeit von Zahnarzt mit zwei Helferinnen erforderlich macht.

Vorliegender Erfindung liegt daher die Aufgabe zugrunde, ein Verfahren und eine Vorrichtung zu schaffen, bei der die, das Abdruckmaterial bildenden Komponenten, in der Applikationseinheit gemischt werden, so daß zwischen Mischen der Komponenten, also Beginn der Aushärtung, und Applikation eine kürzestmögliche Zeitspanne erreicht wird, und dabei die Vorrichtung Bestandteil der sogenannten zahnärztlichen Einheit ist, wobei einerseits die Rotationseinrichtung durch die zahnärztliche Turbine, oder durch eine separate Zuführ- und Rotationseinrichtung gebildet ist.

Darüberhinaus soll die Vorrichtung vor Beginn einer prothetischen Arbeit bereits abdruckbereit installiert sein, um ein schnelles und homogenes Durchmischen, insbesondere der dünnflüssigen Abdruckmaterialien ohne Helferin zu gewährleisten, so daß einerseits in kürzester Frist das Abdruckmaterial appliziert werden kann, andererseits eine Helferin für andere notwendige Arbeiten freigestellt wird. Damit leistet die Erfindung einen wesentlichen Beitrag zur Präzession und zur Zeitersparnis für Patient und Behandler, indem eine zwei- oder dreifache Abdrucknahme umgangen werden kann und der eigentliche Polymerisationsprozeß, zumindest der dünnflüssigen Masse, am Zahn und nicht bereits im Abdrucklöffel merkbar wirksam wird.

Dem allgemeinen Erfindungsgedanken des Verfahrens unterliegen also die Ausbildung zweier Vorrichtungsausführungen, wobei beiden Varianten der Grundgedanke zuzuordnen ist, daß innerhalb der Applikationseinheit die Mischung der das Abdruckmaterial bildenden Komponenten erfolgt, wobei bei der ersten Ausführungsform die Applikationseinheit derart ausgebildet ist, daß sie die Komponenten getrennt in Karpulen aufnimmt, mittels geeigneten Mitteln die Trennwirkung aufhebt und durch Rotation vermischt, wobei zur Vermischung die zahnärztliche Einheit herangezogen wird und bei der zweiten Ausführungsvariante in die Applikationseinheit eine getrennte Zuführung der Komponenten erfolgt unter gleichzeitiger oder anschließender Vermischung innerhalb der Appliktionseinheit und dabei, vorzugsweise von der Zuführeinrichtung die Applikationseinheit bzw. ein Teil hiervon, in Rotation zum Zwecke der Vermischung gesetzt wird und sodann die Applikationseinheit von dieser Rotations- und Zuführeinrichtung abgenommen und das Abdruckmaterial im Patientenmund appliziert werden kann.

Diese Aufgaben werden gemäß der Erfindung nach dem Verfahren laut Anspruch 1 gelöst. Besondere Merkmale des Verfahrens sind in den Unteransprüchen gekennzeichnet.

Die Vorrichtung zur Durchführung des Verfahrens ist gemäß Anspruch 10 beschrieben, wobei in den nachfolgenden Unteransprüchen besondere Ausführungsmerkmale und -formen der Vorrichtung beschrieben sind. ˙

Anhand den beigefügten Zeichnungen, die besonders bevorzugte Ausführungsbeispiele der Erfindung zeigen, wird diese nun näher erläutert.

Dabei zeigen:

Figur 1 im Schnitt eine Gesamtansicht der Vorrichtung mit integriertem Mikromotor;

Figur 2 gesondert die Mischkapsel oder -karpule;

Figur 3 einen Schnitt durch Figur 1, in der durch die gestrichelte Linie angedeuteten Höhe der Gesamtansicht ohne die Darstellung der Kraft-Übertragungs-Welle, des Rundprofils, des Mitnehmers und des Bedienungsknopfes;

Figur 4 einen Schnitt einer Variante der Gesamtansicht der Vorrichtung mit integriertem Mikromotor;

Figur 5 eine weitere Variante der Gesamtansicht der Vorrichtung mit integriertem Mikromotor;

Figur 6 bis Figur 20 eine Ausführungsvariante der Vorrichtung;

Figur 21 bis Figur 23 eine weitere Ausführungsvariante der Vorrichtung;

Figur 24 bis Figur 26 eine weitere Ausführungsvariante der Vorrichtung;

Figur 27 eine perspektivische Darstellung der Vorrichtung und

Figur 28 eine Frontansicht der Vorrichtung gemäß Figur 27;

Figur 29 eine Draufsicht der Vorrichtung gemäß Figur 27;

Figur 30 einen Schnitt entlang der in Figur 29 angedeuteten Richtung A-A;

Figur 31 die Applikationseinheit;

Figur 32 die Applikationseinheit in Verbindung mit dem Injektionsspitzen;

Figur 33 eine Ausführungsform der Dosierzylinder;

Figur 34 bis Figur 36 eine Ausführungsform der Mischflügel.

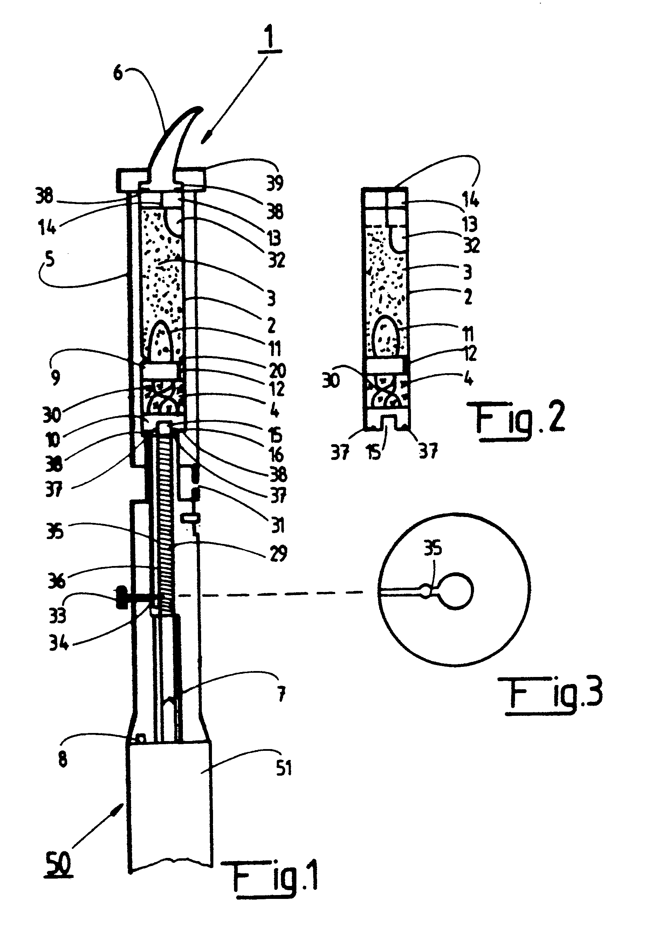

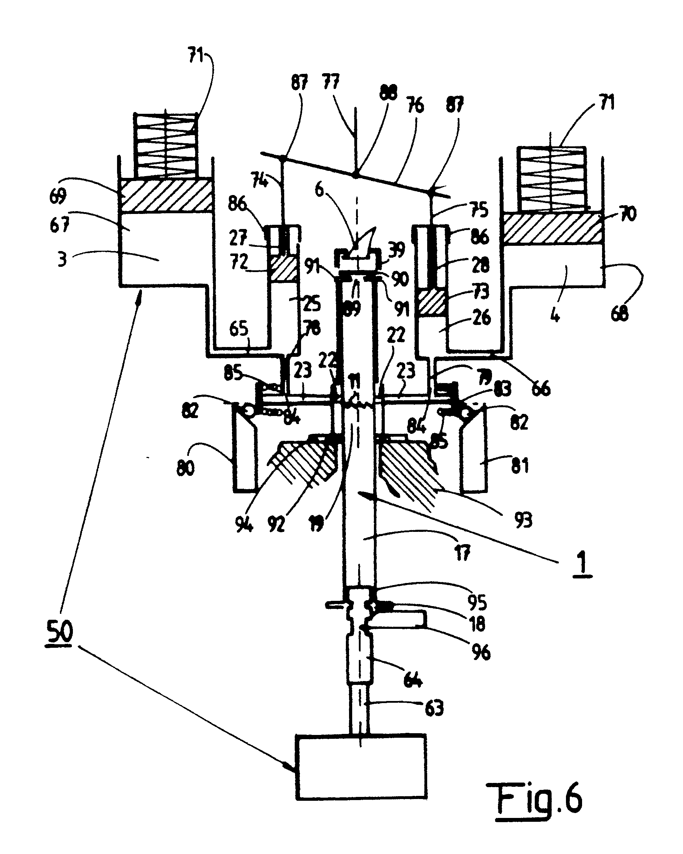

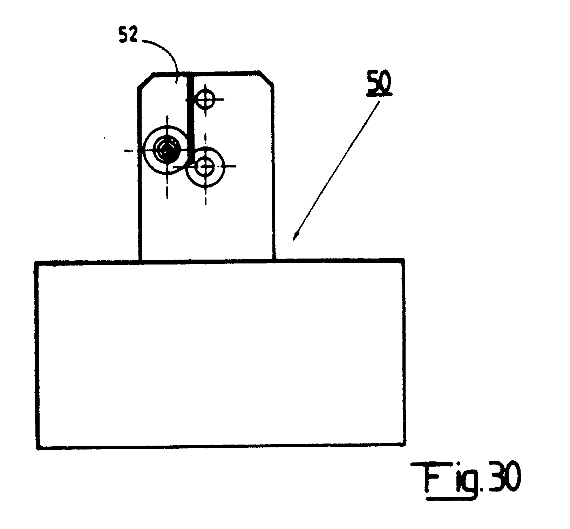

Es ist hierbei anzumerken, daß die Figuren 1 bis 5 eine Vorrichtungsvariante darstellen, bei der die Komponenten innerhalb der Applikationseinheit 1 getrennt in Karpulen vorliegen und die Vorrichtung mittels einer Rotationseinrichtung 50 in Form eines Mikromotors 51 erfolgt, also keine Zuführung der Komponenten durchzuführen ist, während die Figuren 6 bis 35 sich mit der Vorrichtungsvariante befassen, die aus der Applikationseinheit 1 und der Rotations- und Extrusionseinrichtung 50 besteht, also hier die Komponenten getrennt der Applikationseinheit 1 extern zugeführt werden.

In näherer Erläuterung zeigt Figur 1 eine Gesamtansicht der Vorrichtung im Aufschnitt, wobei die Applikationseinheit 1 hier als modifiziert dargestelltes Handstück 5 ausgebildet und über Adapter 8 und Mitnehmer 7 mit als der Rotationseinheit 50 dienenden Mikromotor 51 verbunden ist. Die Mischkapsel oder -karpule 2 ist eingelegt und das Handstück 5 damit in Bereitschaft. Es ist erkennbar, daß der Mitnehmerzapfen 16 der Kraft-Übertragungswelle 29 in die Aufnahme 15 des Karpulenkolbens 10 eingreift. Dieser wiederum ist über die Verbindungselemente 30 mit dem Karpulenkolben 9 verbunden, so daß eine über die Kraft-Übertragungswelle 29 ausgelöste Rotation des Karpulenkolbens 10 auf den Karpulenkolben 9 und damit auf den oder die Mischflügel 11 übertragen wird. Gleichzeitig macht die Abbildung deutlich, daß mit Einrasten der Spannvorrichtung 31 die Kraft-Übertragungswelle 29 den Karpulenkolben 10 nach oben treibt, wodurch die Härtermasse 4 durch den ventilartigen Durchbruch 12 in die Abdruckmasse 3 eingepreßt wird. Hierbei ist anzumerken, daß die Verbindungselemente 30 zwischen Karpulenkolben 10 und Karpulenkolben 9 elastisch ausgebildet sind und sich während des Zusammenbewegens beider Kolben verzwirbeln, so daß das Volumen zwischen beiden Kolben, in der sich die Härtermasse 4 befindet verringert wird und somit das Ausströmen der Härtermasse 4 hin zur Abdruckmasse 3 gewährleistet.

Mit dem üblichen Fußbetätigungsschalter der zahnärztlichen Einheit wird der Mikromotor 51 aktiviert und über den Mitnehmer 7 die Kraft-Übertragungswelle 29 in Rotation versetzt. Da mit dem vom Rundprofil abweichenden Mitnehmerzapfen 16 diese Rotation über die Verbindungselemente 30 an den Karpulenkolben 9 weitergeleitet wird, erfolgt eine Mischbewegung des oder der Mischflügel 11. Es ist nachzutragen, daß das Einbringen der Härterpaste oder Flüssigkeit 4 über den ventilartigen Durchbruch 12 durch den in Kompartiment eingebrachten Lufteinschluß 32 erleichtert wird.

Nach Abschluß des Mischvorganges der vom Behandler individuell gewählt werden kann, erfolgt durch Betätigung des Bedienungsknopfes 33 das Einrasten des Mitnehmers 34 in die als Mitnehmerspindel fungierende Kraft-Übertragungswelle 29. Damit wird der in der Führung 35 rotationsstabile Mitnehmer gezwungen, das Rundprofil 36 nach oben zu bewegen, so daß mit dem Eingreifen dieses Profils 36 in die Kontaktstelle 37 des Kolbens 10 die Karpulenkolben 10 und 9 nach oben bewegt werden. Dies bewirkt ein Austreiben der homogen vermischten Abdruckmasse über den ventilartigen Durchbruch 14 des Verschlußkolbens 13 in die Applikationsspitze 6, die über die Dichtung 38 und die Verschlußkappe 39 ein sicheres Applizieren der Abdruckmasse am Zahn ermöglicht. Nach Lösen der Verschlußkappe 39 gelingt das mühelose Reinigen und Wiederverwenden der Applikationsspitze 6 und das erneute Einbringen einer frischen Mischkapsel oder -karpule 2.

Figur 2 zeigt in Detailansicht eine Mischkapsel oder -karpule 2. Auch hier soll der dargestellte Mischflügel 11 und der Lufteinschluß 32 hervorgehoben werden. Darüberhinaus zeigt Figur 2 zwei verschiedene Größen des Verschlußkolbens 13, womit es möglich wird, einheitliche Karpulen herzustellen und über variable Verschlußkolben 13 die gewünschte Menge von Abdruckmaterial 3 einzubringen, die natürlich mit der Menge des Härters 4 korrelieren muß.

Figur 3 zeigt in Detailansicht einen Querschnitt durch das modifizierte Handstück in Höhe des Bedienungsknopfes 33, der in dieser Darstellung nicht gezeigt ist. Die Abbildung soll lediglich auf die Führung 35 für den Mitnehmer 34 hinweisen.

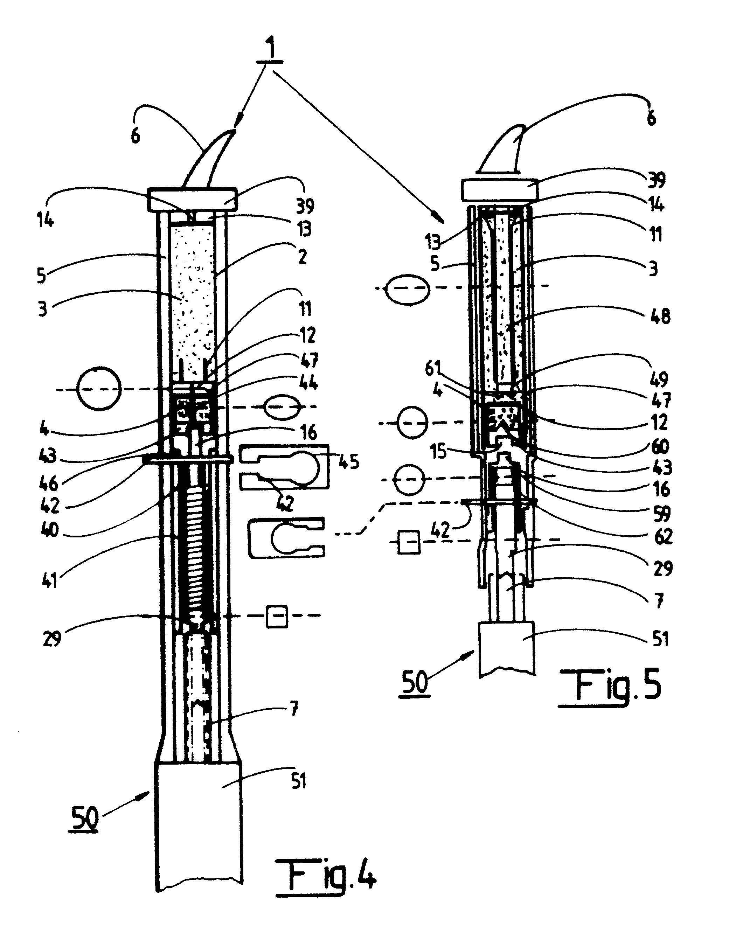

Figur 4 zeigt eine Variante der Gesamtansicht der Vorrichtung im Aufschnitt, wobei ebenfalls das modifizierte dargestellte Handstück 5 mit Mikromotor 51 verbunden ist. Auf die Darstellung von Adapter 8 wurde verzichtet. Die Mischkapsel oder -karpule 2 ist eingelegt und das Handstück damit in Bereitschaft. In dieser Ausführungsform ist die Kraft-Übertragungswelle 29 vom Rundprofil abweichend profilförmig dargestellt und der Mitnehmerzapfen 16 auf der Kraft-Übertragungswelle 29 paßgenau aufgeschobenen Gewindehülse 41 aufmontiert. Die Gewindehülse 41 selbst steht unter Federvorspannung durch die Spiralfeder 40. Sie wird in dieser Position durch das Steuerelement 42 gehalten. Nach Vorschub dieses Steuerelementes wird der größere Durchtritt frei, so daß die Gewindehülse 41 mittels Federkraft den Kolbenanteil 43, gegebenenfalls unter Hilfe von Form 44 vorschiebt und die Härtermasse 4 über den Durchbruch 12 mit der Abdruckmasse 3 in Verbindung bringt.

Über den Mikromotor 51 findet jetzt durch die hier dargestellten Mischfortsätze oder Flügel 11 eine intensive Durchmischung der Kombination Abdruckmasse/Härterpaste statt. Ist dieser Mischvorgang abgeschlossen, wird das Steuerelement 42 in die Endposition gebracht, so daß die Gewindehülse durch den kreisförmigen Ausschnitt des Steuerelementes 42 durchtreten kann und mit der Mutter 46 Verbindung aufnimmt. Alternativ kann das Steuerelement 42 in diesem Ausschnitt selbst einen Gewindeanteil 45 aufweisen.

Die profilförmige Führung der Gewindehülse und die Mutter 46 bewirken im Zusammenspiel, daß die Kolbenkombination 47/43 die Abdruckmasse 3,4 über den Durchbruch 12 aus der Karpule austreibt.

Figur 4 verdeutlicht weiterhin, daß der Kolben 47 im kreisförmigen Zylinderprofil der Karpule 2 drehbar ist, wobei die Mitnehmerfunktion durch die ovale Ausformung des Zylinders 43 und sein paßgenaues Eingreifen in den Zylinder 47 gewährleistet ist.

Figur 5 zeigt eine weitere Variante der Gesamtansicht, wobei jedoch hervorgehoben ist, daß hier die Karpule 2 modifiziert vorliegt. Es zeigt sich eine im Verschlußkolben 13 rotierbare Spindel 48, die im unteren Anteil 49 nicht mit Gewinde versehen ist. Sie greift hier lediglich, geführt in Kolben 47 ein. Nach Freigabe der Federvorspannung durch die Spiralfeder 59 über das Steuerelement 42 greift der Mitnehmerzapfen 16 in die Aufnahme 15 ein. Gleichzeitig wird damit der Zylinder 43 vorgeschoben und die Härterpaste oder -flüssigkeit über den Durchbruch 12 in die Abdruckmasse 3 eingepreßt. Durch Betätigung des Fußschalters der Einheit erfolgt jetzt die intensive Durchmischung von Abdruckmasse 3 und Härterpaste 4 durch Kontakt von Mitnehmerzapfen 60 und Zapfenaufnahme 61 über die Mischflügel 11. Bei weiterer Freigabe der Führungshülse 62 über das Steuerelement 42 gewinnt der Kolben 47 mit seinem inneren Gewindeanteil Anschluß an den Gewindeanteil der rotierenden Spindel 48. Da die Karpule ein vom Rundprofil abweichendes Innenprofil aufweist, dem der Zylinder 47 exakt angepaßt ist, zieht dies das Austreiben des Abdruckmassegemisches 3,4 über die Durchbrüche 14 nach sich.

Die Figur 6 zeigt in schematischer Darstellung die Gesamtansicht der Vorrichtung einer weiteren Auführungsvariante.

Es ist hierbei die gesamte Misch- und Extrusionsvorrichtung gezeigt. Diese besteht in diesem Ausführungsbeispiel aus der als Mischzylinder mit einem Misch- und Austreibkolben 19 ausgebildeten Applikationseinheit 1, die über die Mischkolbenverlängerung 17 und den Mitnehmer 63 über die Mitnehmerhülse 64 eine Verbindung zur Rotationseinheit 50 aufweist. Die grundsätzliche Ausführungsvariante besteht in diesem Vorrichtungsbeispiel darin, daß hier die Rotationseinrichtung 50 zusätzlich als Extrusionseinheit zur getrennten Zuführung der Komponenten in die Applikationseinheit fungiert und entsprechend ausgebildet ist.

Die Applikationseinheit 1 bzw. Mischzylinder wird in dieser Ausführungsform gleichzeitig in entsprechendem Mischungsverhältnis mit Abdruckmaterial 3 und Härter 4 beschickt, wobei die Füllzylinder 25,26 mit entsprechenden Distanzhülsen 27,28 das Mischungsverhältnis und die Zuführmenge bestimmen. Dabei sind die Distanzhülsen 27,28 so ausgelegt, daß die Summe der Volumina von Abdruckmaterial und Härter geringfügig kleiner ist als der Freiraum des zu befüllenden Mischzylinders. Über Verbindungsröhren 65,66 werden dabei die Zylinder 25,26 aus den Vorratszylinder 67,68 mittels Kolben 69,70 und entsprechend dimensionierten Druckfedern 71 beschickt. Die Austreibkolben 72,73 werden mit den Kolbenverlängerungen 74,75 über eine Querstange 76 und einen Kraftverteiler 77 nach unten bewegt und bewirken so über die Auslaßöffnungen 78,79 und die quer angeordneten und als Halte- und Füllröhrchen 23 ausgebildete Injizierkörper 23 den Eintritt der Massen in den Mischzylinder bzw. Applikationseinheit 1. Dabei treiben entsprechend koordiniert die Steuerkeile 80,81 über Walzläger 82, die an den Anschlägen 83 der Halte-und Füllröhrchen anliegen, diese mit ihrer konusartigen Spitze in die in negativer Form gleich ausgebildeten konusartigen Durchbrüche 22 des Mischzylinders bzw. Applikationseinheit 1, wobei diese einerseits stabilisiert wird und andererseits eine Verbindung von den Auslaßröhrchen 78,79 mit den Halte- und Füllröhrchen 23 über die Einlaßöffnung 84 hergestellt wird.

Mit diesem Vorgang wird gleichzeitig die Druckfeder 85 aktiviert, die bei Beendigung der Mischung zur Freigabe des Mischzylinders bzw. Applikationseinheit 1 führt. Die Verschlußkappen 86 der Füllzylinder 25,26 dienen zum Anschlag der Distanzhülsen 27,28 sowie zur Führung der Kolbenverlängerungen 74,75.

Diese wiederum sind gelenkig 87 mit der Querstange 76 verbunden, die ebenfalls wiederum über ein Gelenk 88 mit dem Kraftverteiler 77 verbunden ist. Der Mischzylinder bzw. die Applikationseinheit 1 weist einen Durchbruch 89 auf, der mittels der Verschlußmembran 90, die Vorperforationen aufweist, ventilartig verschlossen ist.

Dies bewerkstelligt die Verschlußkappe 39, die z.B. bajonettartige Zapfen 91 aufnimmt und damit gleichzeitig die Applikationsspitze 6 am Mischzylinder bzw. Applikationseinheit 1 fixiert. Der Mischkolben 19 trägt in bevorzugter Ausführungsform entsprechend geformte Mischflügel 11, die eine homogene Durchmischung von Abdruckmaterial und Härter gewährleisten. Um ein sicheres Einrasten der Halte- und Füllröhrchen 23 in die konusartigen Durchbrüche bzw. Einlaßöffnungen 22 des Mischzylinders bzw. der Applikationseinheit 1 zu gewährleisten, ist dieser über das Profil 92 in der Gehäuseaufnahme 93 verankert. Der Mischzylinder bzw. Applikationseinheit 1 und die Mischkolbenverlängerung 17 sind für die sichere Applikation der Abdruckmasse am Patienten mit Fingerstützen 94 und Fingerauflagen 18 ausgestattet.

In der dargestellten bevorzugten Ausführungsform ist darüberhinaus die Mitnehmerhülse 64 in der Mitnehmerführung 95 so gelagert, daß der Steuerkeil 96 koordiniert mit dem Gesamtvorgang nach Abschluß der Füllung die Mitnehmerhülse 64 und damit den Mischkolben 19 nach oben bewegt und zum Verschluß der konusartigen Durchbrüche bzw. Einlaßöffnungen 22 führt.

Figur 7 zeigt in schematischer Darstellung den Steuervorgang, der sich aus den Einzelkomponenten

a) Fixation des Mischzylinders bzw. der Applikationseinheit;,

b) Füllen des Mischzylinders bzw. der Applikationseinheit,

c) Mischen der Abdruckmassen und

d) Freigabe des Mischzylinders bzw. der Applikationseinheit zusammensetzt. Die Abbildung gibt Einblick in die Vorrichtung von schräg oben, wobei schematisch der Kraftverteiler 77 mit gelenkig angeordneter Querstange 76 und Kolbenverlängerungen 74,75 abgebildet ist.

Hervorzuheben sind die Wellen 97,98, die bevorzugt über Stirnräder 99,100 gegenläufig gekoppelt sind. Beide Wellen wiederum sind in der Gesamtvorrichtung über die Gehäuselager 101 fixiert. An der Welle 97 ist ein Betätigungshebel 102 angebracht, der bei Funktion zur direkt gekoppelten und gegenläufigen Rotation der Welle 98 führt.

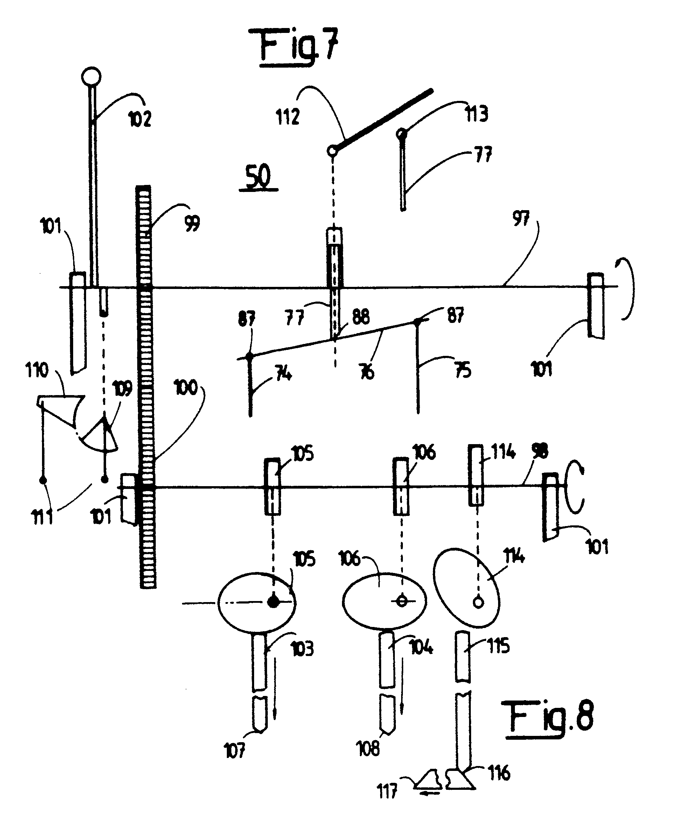

Dies bewirkt eine unmittelbare Abwärtsbewegung der Kraft-Übertragungsstangen 103,104 über die Exzenter 105,106. In der Figur 8 ist dieser Vorgang in einer Seitenansicht noch einmal hervorgehoben. Die Kraft-Übertragungsstangen 103,104 sind mit den Steuerkeilen 107,108 direkt gekoppelt, so daß damit, wie in Figur 6 verdeutlicht, das Halte- und Füllröhrchen 23 seine Funktion aufnimmt.

In zeitlicher Verzögerung startet über den drehbaren 109 und fixen 110 elektrischen Kontakt mittels der elektrischen Pole 111 der Elektromotor der Rotationseinheit 50 den Mischvorgang. Gleichzeitig mit der Rotation des Mischkolbens 19 löst der Betätigungshebel 112 über den Kraftverteiler 77 mit aufmontierter Rolle 113 den Füllvorgang aus. Dieser ist bei entsprechender Stellung des Betätigungshebels 102 beendet, so daß durch den Exzenter 114 und über die Kraft-Übertragungsstange 115 der vertikale 116 und horizontale 117 Steuerkeil verschoben und damit der Mischkolen 19 nach oben bewegt wird, so daß die Durchbrüche 22 verschlossen werden.

Das Zurückbewegen des Betätigungshebels 102, unterstützt durch die Federkräfte der Federn 85,118, bewirkt eine Zurückführung des Gesamtvorganges und eine Freigabe des Mischzylinders bzw. der Applikationseinheit 1.

Gleichzeitig kann jetzt, wie in Figur 6 verdeutlicht, über die Vorratszylinder 67,68 der erneute Füllvorgang der Zylinder 25,26 ausgelöst werden.

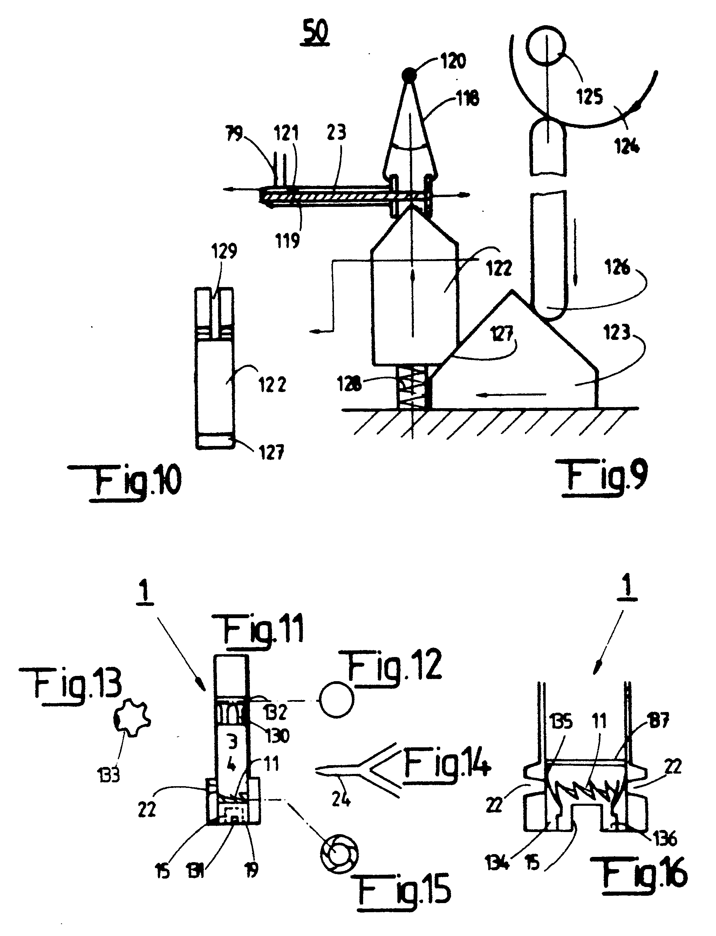

In Figur 9 weist das Halte- und Füllröhrchen 23 in Abwandlung von Figur 6, Verschlußbolzen 119 auf, wobei über die Feder 118, die mittels Federfixation 120 in der Vorrichtung verankert ist, die Ausgangsstellung des Halte-und Füllröhrchens 23 definiert ist. Das Halte- und Füllröhrchen 23 weist einen seitlichen Durchbruch 121 auf, der bei der Seitenbewegung Zugang zum Auslaßröhrchen 79 für den Härter findet. Dabei bewirkt der vertikale Steuerkeil 122 ein Zurückziehen des Verschlußbolzens 119 und ein Eintreiben des Halte- und Füllröhrchens 23 in den konusartigen Durchbruch 22 des Mischzylinders bzw. der Applikationseinheit 1.

Gleichzeitig wird die Feder 118 aktiviert. Die Vertikalbewegung des Steuerkeiles 122 wird durch die Horizontalbewegung des Steuerkeiles 123 eingeleitet, der über einen Exzenter 124, der auf der Exzenterwelle 125 angebracht ist, mit der Steuerstange 126 in Kontakt steht. Die Schrägfräsung 127 macht dabei den Bewegungsverlauf gängiger, so daß ein zusätzliches Lager überflüssig wird.

Gleichzeitig wird durch die Zugfeder 128 die Rückführung des vertikalen Steuerkeiles 122 erleichtert.

Figur 10 zeigt eine Seitenansicht des vertikalen Steuerkeiles 122, wobei der Schlitz 129 hervorgehoben wird, der bei Vertikalführung des Steuerkeiles den Verschlußbolzen 119 aufnimmt.

Figur 11 zeigt in Abwandlung der Vorrichtung, und als Teil der Applikationseinheit, eine bevorzugt verwendete Mischkarpule, die nach oben frei offen ist und die zum Verschluß einen Verschlußkolben 130 aufweist. Hervorzuheben ist weiterhin, daß diese bevorzugte Ausführungsform nur eine Einlaßöffnung 22 aufweist. Der Mischkolben 19 mit der Mitnehmeraufnahme 15 und das Lagerprofil 131 der Mischkarpule bilden ebenso wie die Mischflügel 11 keine Besonderheiten.

Dagegen ist bei dem Verschlußkolben 130 hervorzuheben, daß dieser im oberen Anteil 132 eine Abdichtfunktion übernimmt, im unteren Anteil den Austritt der gemischten Massen herbeiführt, wenn durch Austreiben des Mischkolbens 19 und damit des Verschlußkolbens 130 der Abdichtanteil 132 die Karpule verläßt und die Durchlässe 133 des Verschlußkolbens 130 frei werden.

Figur 12 zeigt einen Schnitt durch den Verschlußkolben 130 im Abdichtanteil 132.

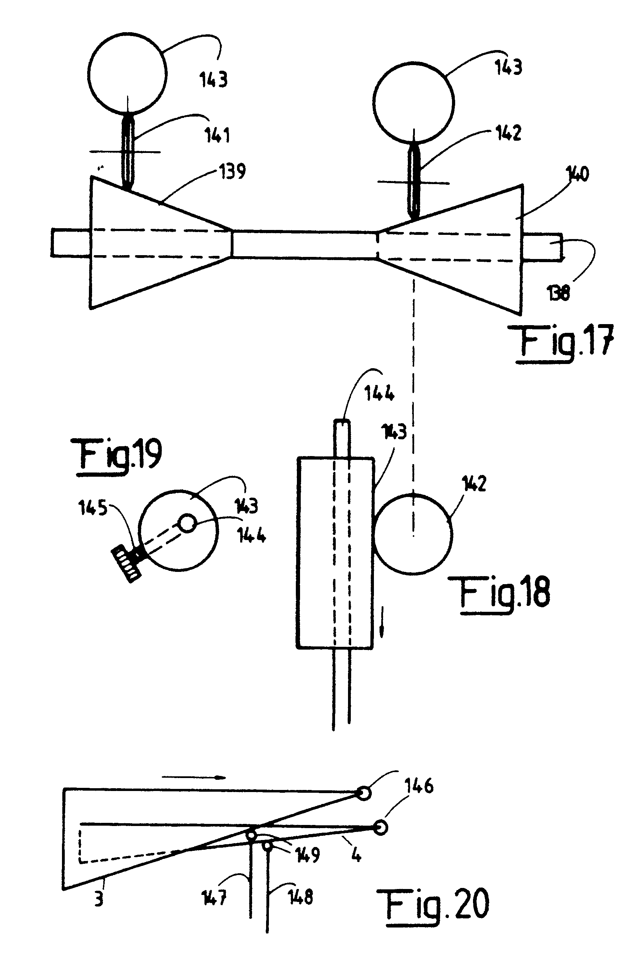

Figur 13 zeigt einen Schnitt des Verschlußkolbens 130 im Durchlaßanteil.

Figur 14 zeigt eine Y-förmige Zuführröhre 24 für Abdruckmaterial 3 und Härter 4, wobei gleichzeitig mit diesem Teil eine Vormischung stattfindet.

Figur 15 zeigt einen Schnitt des Mischkolbens 19 im Bereich der Mischflügel 11.

Im Zusammenhang mit Figur 11 zeigt diese eine Stellung des Verschlußkolbens, in der bereits eine gewisse Menge Abdruckmaterial und Härter zwischen Mischkolben und Verschlußkolben durch die Einlaßöffnung 22 zugeführt wurde.

Figur 16 zeigt eine Teilansicht einer Mischkarpule mit zwei Einlaßöffnungen 22 und einem geteilten Dicht-Mischkolben. Dieser weist bevorzugt eine gummielastische Dichtung 134 mit einer kreisförmigen, keilförmig zulaufenden Dichtlippe 135 auf, in die der Mischkeil 136 mit Mischflügeln 11 und Mitnehmeraufnahme 15 eingelassen ist. Als weitere Besonderheit ist ein Rückhaltering 137 dargestellt, der während des Mischvorganges eine Vertikalbewegung des Mischkolbens im Mischzylinder verhindert. Beim Beschicken der Mischkarpule durch die Einlaßöffnung 22 wird die Dichtlippe 135 der Dichtung 134 zurückgedrängt und bildet nach Abschluß der Beschickung einen ventilartigen Verschluß.

Die Figur 17 zeigt eine alternative Lösungsmöglichkeit für die Steuerung der Zufuhr zweier zu mischender Komponenten in einem beliebigen Mischungsverhältnis. Dabei sind auf der Welle 138 gegeneinander gerichtete Dosierkonen 139,140 für Abdruckmaterial und Härter angebracht. In vorgewählter Position und entsprechend dem gewünschten Mischungsverhältnis greifen bevorzugt Stirnräder 141,142 an, die in direkter Proportionalität zum entsprechenden Radius des Konus rotieren und zum gewünschten Mischungsverhältnis führen.

Die Figur 18 zeigt ein Kraft-Übertragungselement bei Verwendung einer in Figur 17 beschriebenen Dosier-Vorrichtung. Am Stirnrad, hier Stirnrad 142, für den Härter, wird eine Exzenterhülse 143 angelegt, die in entsprechender Position auf der Kraft-Übertragungsstange 144 fixiert ist. Mit der Exzenterhülse 143 gelingt die Kraftübertragung der Räder 141,142 auf die Kraft-Übertragungsstange 144, ohne deren Position wesentlich, wenn überhaupt, verändern zu müssen. Die Räder 141,142 liegen entsprechend ihrer Laufrichtung in Axialrichtung der Exzenterhülse 143 an.

Die Figur 19 zeigt einen Schnitt durch das Kraft-Übertragungselement von Figur 18, wobei durch eine Feststellschraube 145 die Exzenterwelle 143 an der Kraft-Übertragungsstange 144 befestigt ist.

Die Figur 20 zeigt eine weitere alternative Dosiermöglichkeit von Abdruckmaterial 3 und Härter 4 mittels schiefer Ebenen und variabler Dosierwinkel. Die schiefe Ebene wird dabei jeweils für Abdruckmaterial 3 und Härter 4 über Gelenkverbindungen 146 hergestellt.

Durch eine Horizontalbewegung dieser Ebenen werden die Kraft-Übertragungsstangen 147,148 für das Abdruckmaterial 3 und für den Härter 4 über Rollenlager 149 gesteuert.

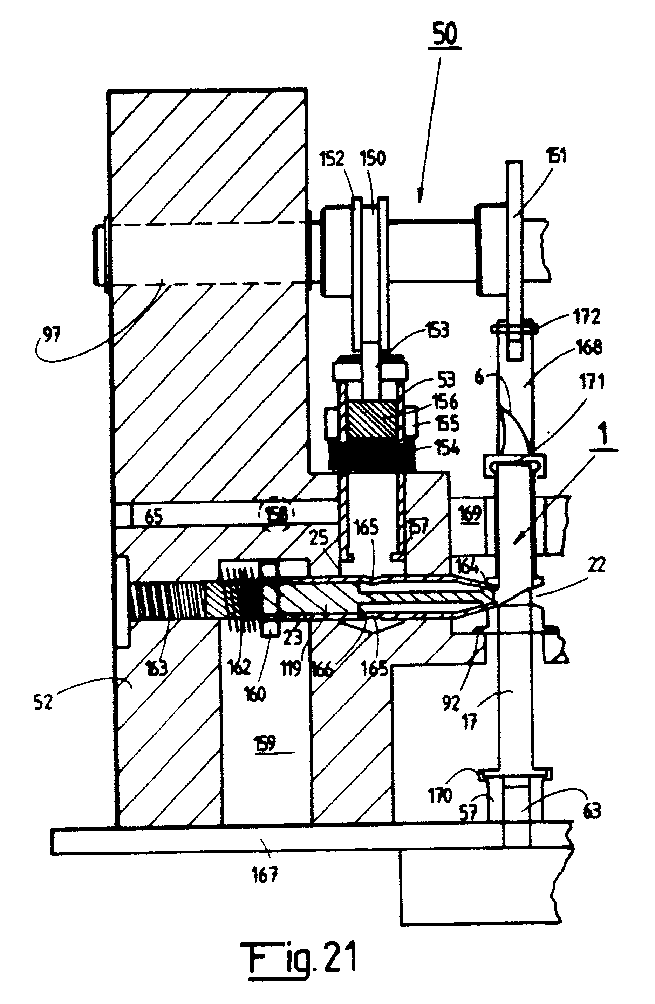

Die Figuren 21 bis 23 zeigen eine vorteilhafte Ausgestaltung der zuvor beschriebenen Vorrichtung.

In Figur 21 ist eine Hälfte der Gesamtvorrichtung mit arretierter Applikationseinheit 1 dargestellt. Dabei sind die wesentlichen Vorrichtungselemente im Dosierblock 52 untergebracht. Von oben betrachtet ist die Welle 97 drehbar gelagert, die in der dargestellten Ausführungsform einen Exzenter 150 und eine Steuerscheibe 151 trägt, wobei der Exzenter 150 in die Führung 152, das Lager 153 drehgesichert aufnimmt und der Dosierkolben 53 integriert ist. Der Dosierkolben 53 ist in der tiefsten Position gezeichnet, so daß die Verbindungsröhre 65 überfahren wurde und die Feder 154 in gespanntem Zustand vorliegt. Diese Feder wiederum stützt sich gegen den Flansch 155 und den Dosierblock 52 ab. Weiterhin ist ersichtlich, daß der Dosierzylinder 53 selbst als Zylinder ausgestaltet ist, so daß der Ausgleichskolben 156 beim Rückführen des Austreibkolbens 53 ein entstehendes Vakuum im Füllzylinder 25 kompensiert.

Dabei verhindert der Anschlag 157 ein Herausgleiten des Ausgleichskolbens 156 aus dem Dosierkolben 53. Bei Freigabe des Dosierkolben 53 durch den Exzenter 150 erfolgt seine Rückfahrbewegung durch die Feder 154. Alternativ ist eine Zwangsführung denkbar, wie sie rechts durch die Steuerscheibe 151 dargestellt ist.

Weiterhin zeigt Figur 21 die Zuführöffnung 158 vom Vorratszylinder 67 (nicht sichtbar) in die Ver

bindungsröhre 65.

Das Halte- und Füllröhrchen 23 wird im Füllzylinder 25 von der jeweiligen Mischkomponente umspült und ist im Block 52 durch die Blockaussparung 159 verfahrbar, indem auf Flansch oder Kugellager 160 die Vorschubbewegung des Halte- und Füllröhrchens 23 durch den nicht dargestellten Stirnnocken 161 freigegeben wird, so daß die Feder 162 den Vorschub des Halte- und Füllröhrchens 23 in die Öffnung 22 ausführen kann. Der Bolzen 119 wird dabei über die Feder 163 mitgenommen und schließt über die Konuspassung 164 das Halte- und Füllröhrchen 23 gegen den Bolzen 119 dicht ab. Weiterhin ist das Halte- und Füllröhrchen 23 im Füllzylinderbereich 25 perforiert 165, so daß nach dem Überfahren der Verbindungsröhre 65 durch den Dosierkolben 53 über den entstehenden Druckaufbau im Füllzylinder 25 und über die Perforation 165 im Halte- und Füllröhrchen 23 der Bolzen 119 über die Stirnfläche 166 zur Seite bewegt wird, so daß die Konuspassung 164 aufgeht und die Abdruckmasse oder der Katalysator in die Applikationseinheit 1 einschießt, die mit dem Lagerprofil 92 auf dem Block 52 zum korrekten Einfahren der Halte- und Füllröhrchen 23 positioniert ist.

Auf die Darstellung von Dichtungselementen wurde verzichtet.

Die Mischkolbenverlängerung 17 wiederum greift in den Mischkolben-Mitnehmer 57 ein, der auf der Elektromotorantriebswelle 63 vertikal verfahrbar angeordnet ist. Unter der Bodenplatte 167 ist dabei der Motor der Rotationseinrichtung 50 positioniert.

Weiterhin zeigt die Figur 21, daß über die Steuerscheibe 151 und damit zwangsgeführt über das Gestänge 168, das zusätzlich im Mischzylinder das Halteelement 169 verfahrbar ist, über Mitnehmer-Umlauf 170 eine Vertikalbewegung der Mischkolbenverlängerung 17 durchführt, die zum Verschluß der Mischzylinderzuführungen 22 bzw. Öffnungen führt.

Diaphragma 171 des Mischzylinders bzw. Applikationseinheit 1 ist in der dargestellten Variante als Sieb ausgeführt, das einerseits beim Füllvorgang des Mischzylinders 1 einen Luftdurchtritt gewährleistet und andererseits beim Mischvorgang die Abdruckmassen zurückhält.

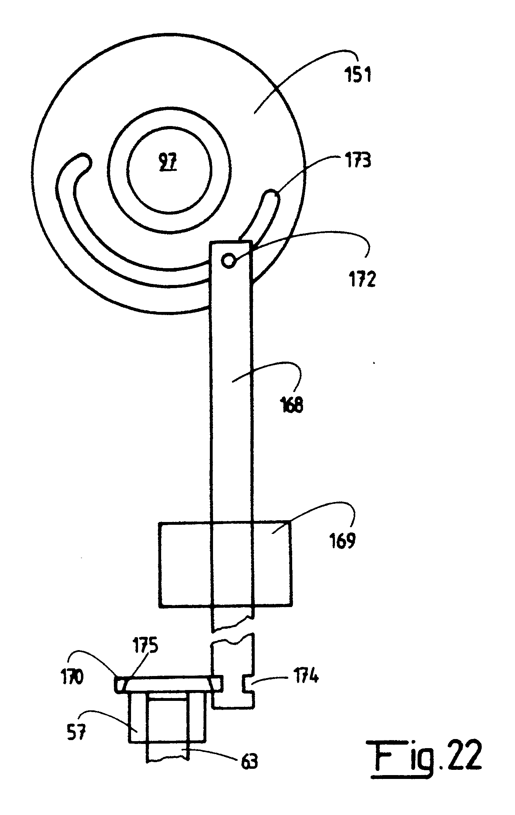

Figur 22 zeigt noch einmal detailliert und in Seitenansicht die Vertikalbewegung der Mischkolbenverlängerung 17, die hier nicht eingezeichnet ist. Erkennbar ist die Steuerscheibe 151 auf der Welle 97. Das Gestänge 168 greift mit dem Stift 172 in die Steuerkurve 173 ein, die bei Linksdrehung der Steuerscheibe 151 im endständigen Verlauf zur Vertikalbewegung des Gestänges 168 nach oben und über die Aussparung 174 und Mitnehmerumlauf 170 zur Vertikalverfahrung des Misch

kolbenmitnehmers 57 auf der Elektromotorantriebswelle 63 führt. Durch die negativ konische Fräsung 175 des Mischkolbenmitnehmers 57 wird verhindert, daß die Mischkolbenverlängerung 17 während der Mischbewegung aus dem Mitnehmer 57 herausgleitet. Das Mischzylinderhalteelement 169 gewährleistet eine zusätzliche Führung des Gestänges 168.

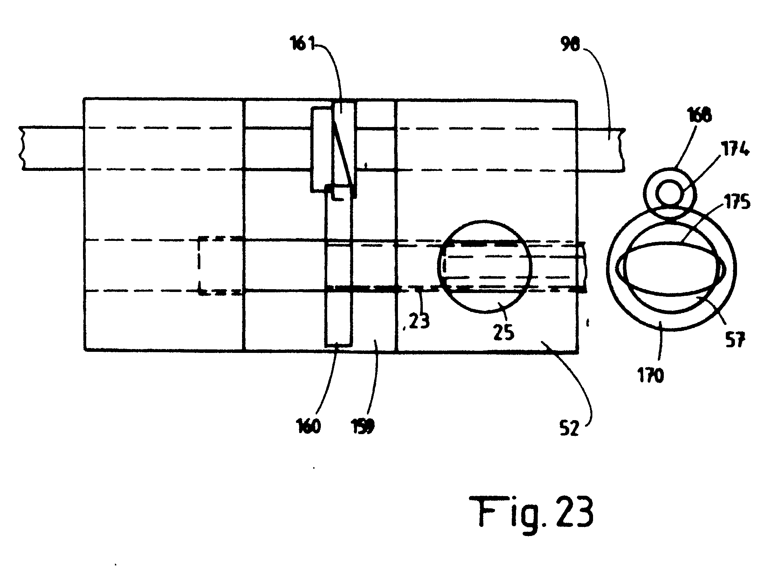

Figur 23 zeigt eine Draufsicht der in Figur 21 dargestellten Vorrichtungshälfte in Höhe des Halte- und Füllröhrchens 23. Dabei ist im oberen Anteil die in Figur 21 verdeckte Welle 98 erkennbar, die die Stirnnocke 161 in der Blockaussparung 159 trägt. Die Stirnnocke 161 greift am Flansch oder Kugellager 160 des Halte- und Füllröhrchens 23 an, das lediglich strichliert dargestellt ist. Die Draufsicht zeigt weiterhin den Füllzylinder 25 und rechts von Block 52 angeordnet den Mischkolbenmitnehmer 57 mit seinem Umlauf 170 und der Mitnehmerfräsung 175. Weiterhin ist das Gestänge 168 im Bereich der Aussparung 174 erkennbar.

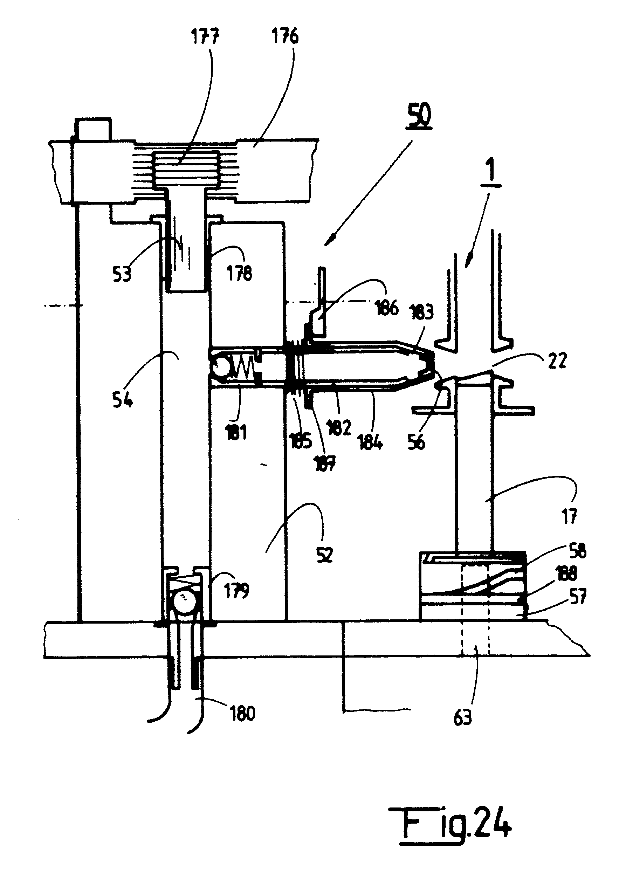

In Figur 24 ist im Ausschnitt eine Hälfte der Gesamtvorrichtung mit arretierter Applikationseinheit 1 im Aufriß dargestellt. Im oberen Anteil ist die Zahnwellenverbindung von Zahnwelle 176 und Dosierkolben 53 dargestellt, wobei der Dosierzylinder 53 stirnseitig bevorzugt zirkulär verzahnt ist 177 und bündig in die Verzahnung von Zahnwelle 176 eingreift. Da zahnärztliche Abdruckmaterialien normalerweise aus der eigentlichen Abdruckkomponente und ihrem Härter bestehen und diese wiederum große Schwankungen ihres Mischungsverhältnisses aufweisen können, bestehen zwei Möglichkeiten der Dosierung. So kann einerseits den entsprechenden Massen gehorchend der Dosierraum 54 mit seinem Dosierkolben 53 entsprechend dimensioniert werden, aus Ratationalitätsgründen ergibt sich einerseits jedoch eine Möglichkeit, wie sie in Figur 24 dargestellt ist.
Hier sind die Dosierblöcke 52 mit einer Einheitszylinderbohrung versehen, in die entsprechend dem jeweils geforderten Mischungsverhältnis Einsätze 178 und darauf abgestimmte Dosierkolben 53 Verwendung finden.

Die Figur 24 zeigt weiterhin, daß die Zylinderbohrung 54 bzw. Dosierraum in ihrem unteren Anteil mit einem Rückschlagventil 179 versehen ist, das hier als Kugelventil ausgebildet, beim Rückzug vom Dosierkolben 53 über die Schlauchverbindung 180 aus dem nicht dargestellten Vorratsbehältnis Masse nachzieht.

Weiterhin zeigt Figur 24 als Besonderheit, daß in Höhe der Mischzylindereintrittsöffnung 22 der Dosierblock 52 mit einem weiteren Rückschlagventil 181 versehen ist, das Zugang zum Dosierraum 54 besitzt. Es arbeitet dem Rückschlagventil 179 entgegengesetzt, so daß bei Abwärtsbewegung von Dosierkolbens 53 das Rückschlagventil 179 schließt und das Rückschlagventil 181 öffnet.

Als weitere Besonderheit ist das Rückschlagventil 181 mit einem paßgenau gearbeiteten Austrittsröhrchen 182 versehen, das an seinem konusartigen Ende mindestens eine Austrittsöffnung 183 trägt. Über diesem ist abdichtend das eigentliche Füllröhrchen 184 gegen Federkraft 185 aufgesetzt, das in Verschlußposition durch die Stirnnocke 186 mit seiner formschlüssigen Innenkonuspassung die Austrittsöffnung(en) 183 verschließt. Die Stirnnocke 186 greift dabei am Flansch 187 des Füllröhrchens 184 an. Das Füllröhrchen 184 selbst wiederum besitzt auch an seiner endständigen Außenfläche bevorzugt eine Konusform, die paßgenau in die Einlaßöffnung 22 der Applikationseinheit 1 eingreift. Im unteren Anteil der Figur 24 ist die Mischkolbenverlängerung 17 im Mischkolbenmitnehmer 57 arretiert, der auf der Motorwelle 63 der Rotationseinrichtung 50 verfahrbar angeordnet ist.

Der Mischkolbenmitnehmer 57 trägt an seiner Außenfläche eine spiralförmige Einfräsung 58, die in Umlauf 188 einmündet, und die den Bolzen 189 (nicht sichtbar) der Hilfsvorrichtung aufnimmt, der beim Einfahren und bei dem laufenden Motor den Mischkolbenmitnehmer 57 nach oben zwingt und damit über die Mischkolbenverlängerung 17 zum Verschluß der Einlaßöffnungen 22 der Mischzylinder bzw. Applikationseinheit 1 führt.

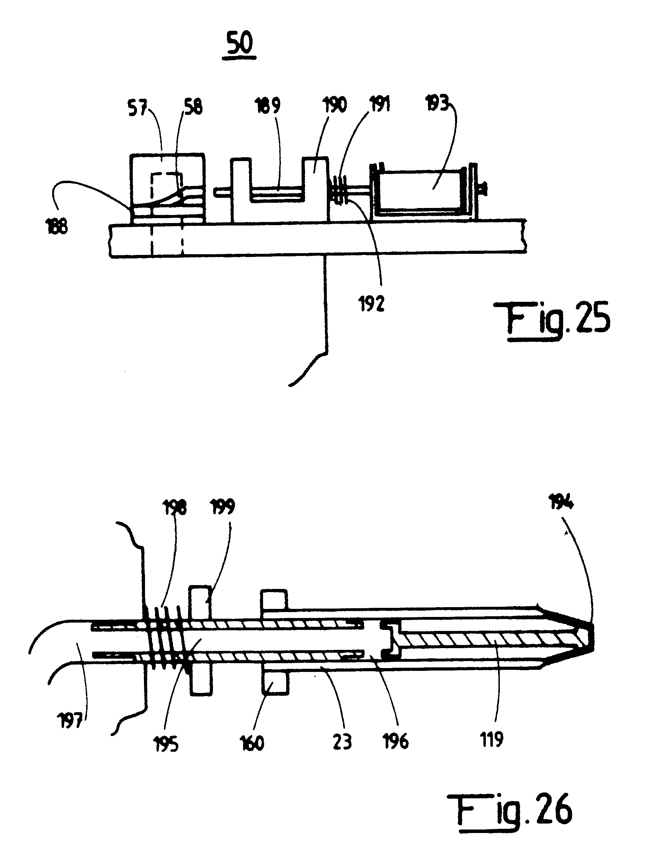

Figur 25 zeigt im Detail die Hilfsvorrichtung mit Mischkolbenmitnehmer 57, Bolzen 189, der im Gehäuse 190 geführt ist und durch die Feder 191 über den Flansch 192 rückführbar ist. Die Vorwärtsbewegung des Bolzens erfolgt über einen Elektromagneten 193.

Figur 26 zeigt ein modifiziertes Halte- und Füllröhrchen 23 mit Flansch oder Kugellager 160. Das Halte- und Füllröhrchen 23 besitzt hier keine Perforation. Der verfahrbare Bolzen 119 ist ebenfalls mit einer Konuspassung 194 für das Halte- und Füllröhrchen 23 versehen. Dagegen weist der Bolzen 119 eine Bohrung 195 auf, die im Halte-und Füllröhrchen 23 mindestens eine Perforation 196 besitzt. Weiterhin ist der Bolzen 119 an seinem hinteren Ende mit einer Schlauchverbindung 197 versehen, das an einem, ähnlich dem Rückschlagventil 181 wirkenden Rückschlagventil arretiert ist. Im Druckaufbau durch die Dosierkolben 53 tritt durch die Perforation(en) 196 Masse in das Halte- und Füllröhrchen 23 ein, so daß durch den entstehenden Druckaufbau der Bolzen 119 die Konuspassung 194 durch seine Verfahrbarkeit freigibt und die Abdruckmasse in die Einlaßöffnungen 22 des Mischzylinders 1 einschießen kann. Die Rückführung des Bolzens 119 ist in Figur 26 schematisch durch die Feder 198 und dem Flansch 199 dargestellt.

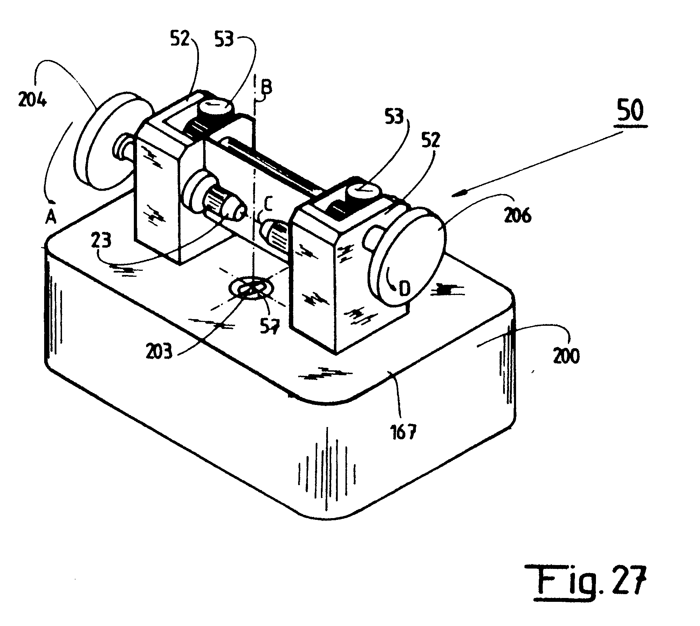

Figur 27 zeigt eine perspektivische Darstellung der erfindungsgemäßen Vorrichtung.

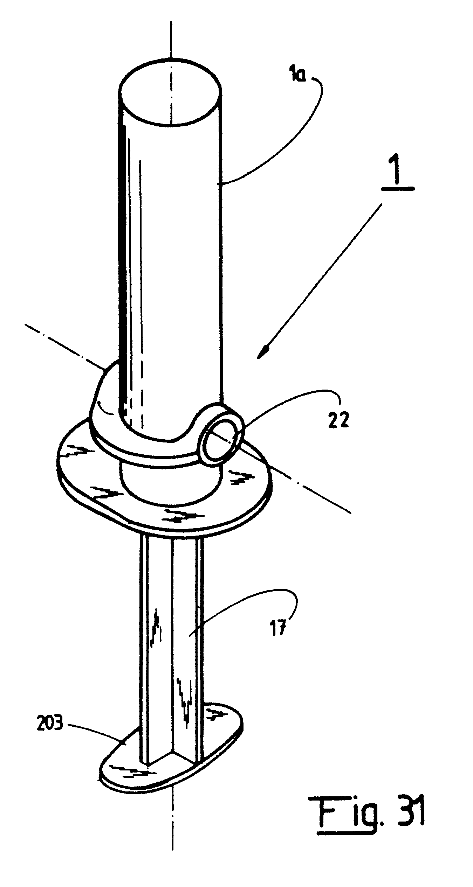

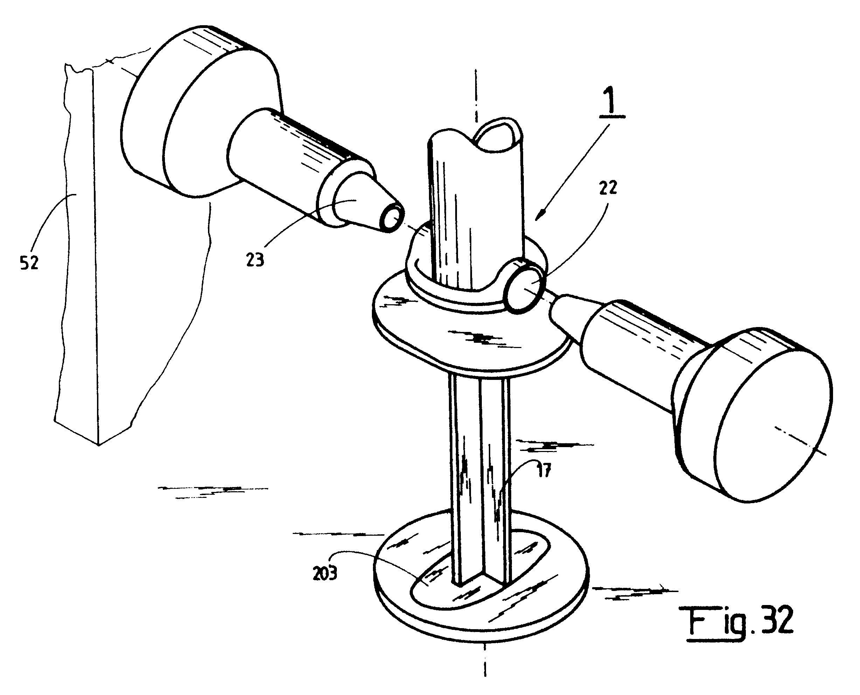

In einem Gehäuse 200 sind die elektrischen Antriebseinheiten untergebracht. Erkennbar sind in diesem Ausführungsbeispiel zwei Dosierblöcke 52, in denen die Dosierung der Komponenten erfolgt. Hierzu werden die Komponenten über nicht dargestellte Aufnahmebehälter den Dosierkolben 53 zugeführt oder aber über entsprechende Injiziereinheiten in den Dosierraum eingebracht. Die Applikationseinheit 1 wird in der Achse B positioniert und mittels des ovalen Fußes 203 (siehe Figur 31 und 32), der Teil des Austreibkolbens ist, in die Aufnahme im Gehäuseboden 167 arretiert. Durch Drehbewegung des Rades 204 nach A verfahren die Injektionsspitzen in der Achse C zur Achse B und ragen somit abdichtend in die Öffnungen 22 (siehe Figur 31 und 32) der Applikationseinheit 1 ein. Durch Drehbewegung des Rades 206 nach D werden die Dosierkolben 53 nach unten verfahren und die Komponenten den Halte- und Füllröhrchen 23 und somit der Applikationseinheit 1 zugeführt. Bevorzugterweise setzt schon jetzt die Rotation ein und der Rotationskörper 57 des Gehäuses fährt nach vorbestimmter Taktzeit nach oben, so daß während die Applikationseinheit 1 höhenfixiert ist, die Kolbenverlängerung 17 nach oben fährt und die Öffnungen 22 der Applikationseinheit 1 sperrt, so daß keine Komponenten mehr nachfließen können.

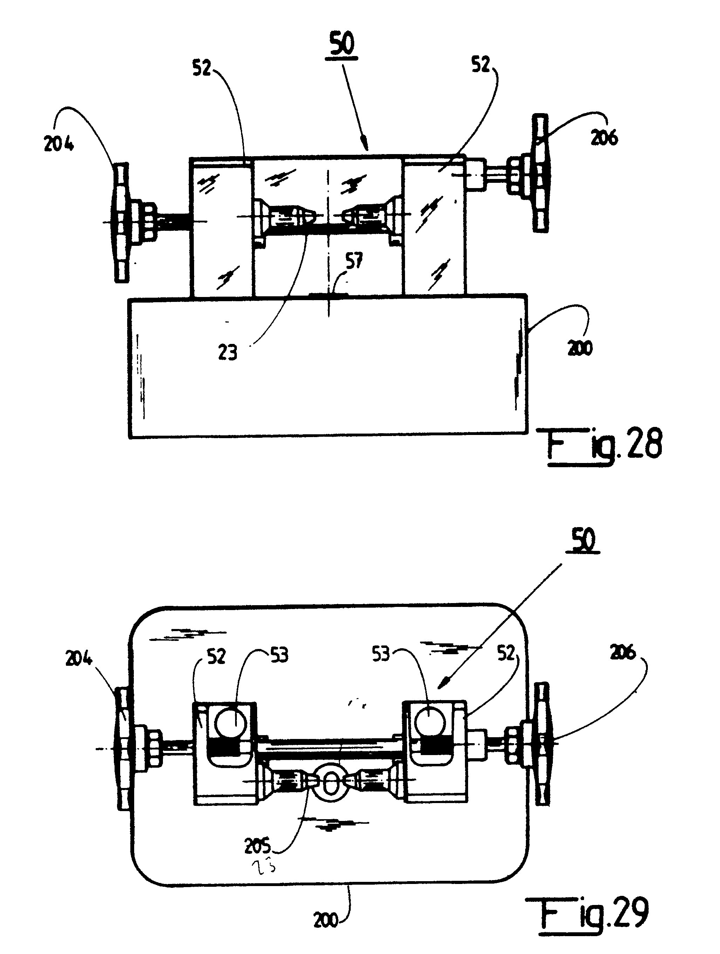

Figuren 28 bis 30 zeigen verschiedene Ansichten bzw. einen Schnitt der erfindungsgemäßen Vorrichtung gemäß Figur 27.

Die Figur 31 zeigt die Applikationseinheit 1 in einer besonders bevorzugten Ausführungsform. Sie ist als Spritze ausgebildet und weist einen oberen Mischraum 1a auf, dem beidseits zur Zuführung der Komponenten Öffnungen 22 zugeordnet sind. Die Kolbenverlängerung 17 weist innerhalb des Mischraumes hier nicht sichtbare Mischflügel 11 auf, die während der Zuführung der Komponenten die Öffnungen 22 nicht dicht sperren. Mittels des Fußsockels 203 wird eine zuverlässige Retention mit dem Rotationskörper 57 der Rotations- und Zuführeinrichtung 50 erreicht, wobei die Kolbenverlängerung 17 mit Mischflügel taktabgestimmt nach Beendigung des Mischvorganges in den Mischraum der Applikationseinheit 1 eingedrückt wird, also hochgefahren wird und dabei die Öffnungen 22 sperrt.

Die Figur 32 zeigt die Applikationseinheit in Verbindung mit den Halte- und Füllröhrchen 23, wobei die vorgeschilderte Arbeitsweise nochmals hieraus hervorgeht.

Die Figur 33 zeigt eine weitere Ausführungsform der Dosierkolben 53. Innerhalb des Dosierraumes 54 ist der eigentliche Dosierkolben 53 und ein Schwimmkolben 55 angeordnet. Der Dosierkolben 53 weist eine Innenbohrung 207 auf, in der ein senkrechter Stab 208 des Schwimmkolbens 55 eingeführt ist. Der Schwimmkolben 55 ist somit innerhalb des Dosierkolbens 53 und der Dosierkammer 54 höhenverfahrbar. Wenn nun eine Komponente in die Dosierkammer 54 eingebracht wird, treibt der Schwimmkolben 55 nach oben und für den Anwender wird die Position des Stabes 208 erkennbar. Entsprechend dieser Position ist die Dosiermenge ablesbar.

Mit der vorbeschriebenen Ausführungsform wird also ermöglicht, daß nach Einsetzen der Applikationseinheit 1 in die Achse und somit mit der Retention zum Mischkolbenmitnehmer 57, diese auf der Vorrichtung arritiert ist und durch Bewegen der Räder 204 und 206 eine Dosierung und Injektion mittels der Injizierkörper 23 in die Applikationseinheit 1 erfolgt, wobei die Injektionskörper 23 bei DrehbewegAng der Räder 204 und 206 auf den Applikationskörper 1 zubewegt werden und in die Öffnungen 22 abdichtend einragen. Durch entsprechende Endschalter wird der Injektionsvorgang und der Rotationsvorgang gesteuert, wobei der Mischkolbenmitnehmer 57 entsprechend abgestimmt auf die Injektions- und Mischarbeitsstufen einen Aufwärtshub beschreitet und dabei den Austreibkolben 19 in die Applikationseinheit 1 einfährt, während diese höhenfixiert an der Vorrichtung befestigt ist und dabei die Einlaßöffnungen 22 der Applikationseinheit 1 sperrt. Nach Beendigung des Mischvorganges kann die Applikationseinheit 1, von der Rotations- und Extrusionseinheit 50 abgenommen und der Applikationsvorgang im Patientenmund vorgenommen werden.

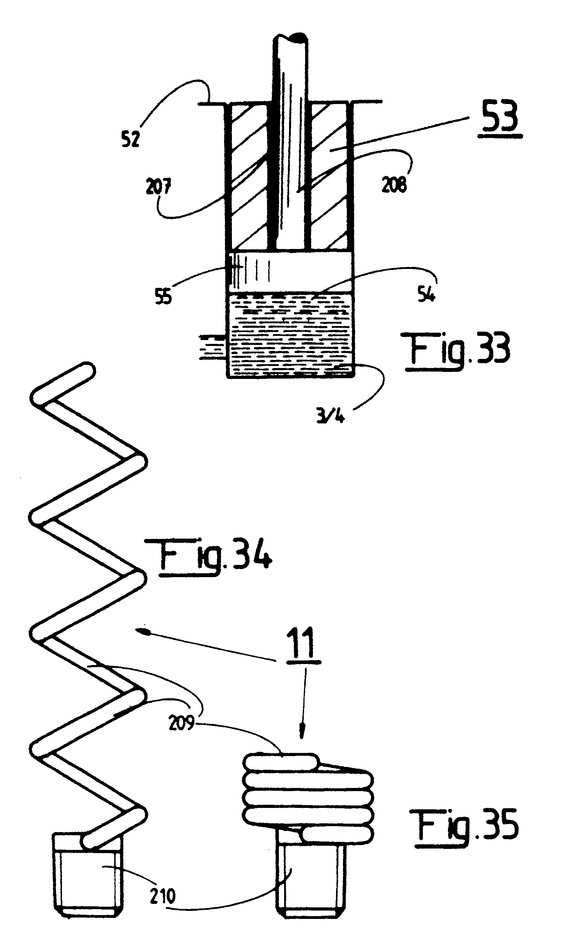

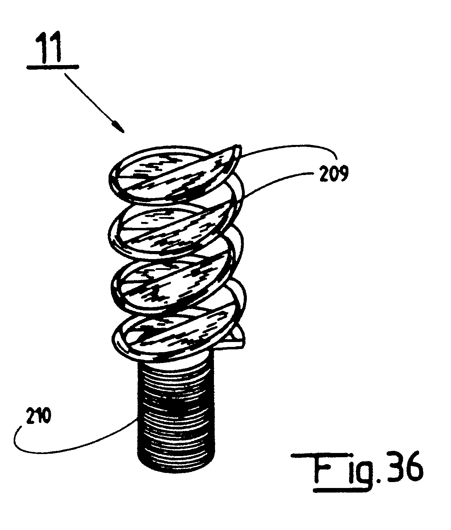

Die Figuren 34 und 36 zeigen eine besonders bevorzugte Ausführungsform des Mischflügels 11. Der Mischflügel 11 besteht aus zueinander flexiblen Einzelwinden 209, die im unteren Auslauf einen Gewindezapfen 210 tragen. Mit diesem Gewindezapfen 210 erfolgt die Verbindung im Austreibkolben 19, der hier nicht dargestellt ist. Durch Antrieb, wird der Mischflügel 11 in Rotation versetzt, wobei eine zuverlässige Verwirbelung und Durchmischung der Komponenten während der Rotation erfolgen kann. Beim Austreiben des Kolbens 19 legen sich die Einzelwinden 209 wie in Figur 35 dargestellt ist, zusammen, so daß der Volumen im Mischraum unbehindert zum Zwecke des Austreibens der Abdruckmassen veringert werden kann.
Diese Ausführungsform des Mischflügels 11, wird erreicht, daß dieser eine Rotationsstabilität aufweist, während die axiale Stabilität bewußt flexibel gewählt wurde.

Bezugszeichenliste

1 Applikationseinheit/Mischzylinder
2 Karpulen
3 Komponenten

4 Komponenten
5 Winkel- oder Handstück
6 Applikationsspritze
7 Mitnehmer
8 Adapter
9 Karpulenkolben
10 Karpulenkolben
11 Mischflügel
12 Durchbruch
13 Verschlußkolben
14 Durchbruch
15 Aufnahme
16 Mitnehmerzapfen
17 Mischkolbenverlängerung
18 Handstück/Fingerauflage
19 Austreibkolben/Mischkolben
20 -
22 -
23 Injizierkörper (Halte- und Füllröhrchen)
24 -Y-förmige Zufuhrröhre
25 Füllzylinder
26 Füllzylinder
27 Dosierdistanzhülse
28 Dosierdistanzhülse
29 Kraftübertragungswelle
30 Verbindungselement
31 Spannvorrichtung
32 Lufteinschluß
33 Bedienungsknopf
34 Mitnehmer
35 Führung
36 Rundprofil
37 Kontaktstelle
38 Dichtung
39 Verschlußkappe
40 Spiralfeder
41 Gewindehülse
42 Steuerelement
43 Kolbenanteil
44 Form
45 Gewindeanteil
46 Mutter
47 Kolben
48 Spindel
49 unterer Anteil von 48
50 Extrusions-und/oder Rotationseinrichtung
51 Mikromotor
52 Dosierblöcke
53 Dosierzylinder
54 Dosierraum
55 Schwimmkolben
56 Spitze von 23
57 Mischkolbenmitnehmer
58 Einfräsung
59 Spiralfeder
60 Mitnehmerzapfen
61 Zapfenaufnahme
62 Führungshülse

63 Mitnehmer
64 Mitnehmerhülse
65 Verbindungsröhrchen
66 Verbindungsröhrchen
67 Vorratszylinder
68 Vorratszylinder
69 Kolben
70 Kolben
71 Druckfeder
72 Austreibkolben
73 Austreibkolben
74 Kolbenverlängerung
75 Kolbenverlängerung
76 Querstange
77 Kraftverteiler
78 Auslaßöffnung
79 Auslaßöffnung
80 Steuerkeil
81 Steuerkeil
82 Walzläger
83 Anschläge
84 Einlaßöffnung
85 Druckfeder
86 Verschlußkappe
87 Gelenk
88 Gelenk
89 Durchbruch
90 Verschlußmembran
91 Zapfen von 39
92 Profil
93 Gehäuseaufnahme
94 Fingerstutzen
95 Mitnehmerführung
96 Steuerkeil
97 Welle
98 Welle
.99 Stirnrad
100 Stirnrad
101 Gehäuselager
102 Betätigungshebel
103 Kraftübertragungsstange
104 Kraftübertragungsstange
105 Exzenter
.106 Exzenter
107 Steuerkeil
108 Steuerkeil
109 drehbarer Kontakt
110 fixer Kontakt
111 Pole
112 Betätigungshebel
113 Rolle
114 Exzenter
115 Kraftübertragungsstange
116 vertikaler Steuerkeil
117 horizontaler Steuerkeil
118 Feder
119 Verschlußbolzen
120 Federfixation

121 seitlicher Durchbruch von 23
122 vertikaler Steuerkeil
123 horizontaler Steuerkeil
124 Exzenter
125 Exzenterwelle
126 Steuerstange
127 Schrägfräsung
128 Zugfeder
129 Schlitz
130 Verschlußkolben
131 Lagerprofil
132 oberer Anteil von 130
133 Durchlässe
134 Dichtung
135 Dichtlippe
136 Mischkeil
137 Rückhaltering
138 Welle
139 Dosierkonen
140 Dosierkonen
141 Stirnrad
142 Stirnrad
143 Exzenterhülse
144 Kraftübertragungsstange
145 Feststellschraube
146 Gelenk
147 Kraftübertragungsstange für 3
148 Kraftübertragungsstange für 4
149 Rollenlager
150 Exzenter
151 Steuerscheibe
152 Führung
153 Lager
154 Feder
155 Flansch
156 Ausgleichkolben
157 Anschlag
158 Zufuhröffnung
159 Blockaussparung
160 Flansch/Kugellager
161 Stirnnocken
162 Feder
163 Feder
164 Konuspassung
165 Perforierung
166 Stirnfläche
167 Bodenplatte
168 Gestänge
169 Halteelement
170 Mitnehmerumlauf
171 Diaphragma
172 Stift
173 Steuerkurve
174 Aussparung
175 Fräsung
176 Zahnwelle
177 Verzahnung
178 Einsätze

179 Rückschlagventil
180 Schlauchverbindung
181 Schlauchverbindung
182 Austrittsröhrchen
183 Austrittsöffnung
184 Füllröhrchen
185 Feder
186 Stirnnocke
187 Flansch
188 Umlauf
189 Bolzen
190 Gehäuse
191 Feder
192 Flansch
193 E-Magnet
194 Konuspassung
195 Bohrung
196 Perforation
197 Schlauchverbindung
198 Feder
199 Flansch
200 Gehäuse
201 -
202 -
203 Fußoval von 1
204 Rad
205 -
206 Rad

**Ansprüche**

1. Verfahren zum Mischen, insbesondere zahnärztlicher Abdruckmaterialien, bestehend aus wenigstens zwei Materialkomponenten, wie Silikone oder dergleichen mit Härter oder Katalysatoren,
dadurch gekennzeichnet,
daß die Komponenten unmittelbar vor Applikation in den Mund des Patienten in einer als Dosier- und Mischkörper sowie Spritze ausgebildeten Applikationseinheit eingebracht bzw. aufgenommen, vermischt und mittels dieser ausgepresst wird/werden.

2. Verfahren nach Anspruch 1,
dadurch gekennzeichnet,
daß mindestens eine Komponente unmittelbar vor der Applikation in einer Rotations- und/oder Extrusionsvorrichtung, die eine gegebenenfalls mindestens eine weitere Komponente enthaltende und mindestens ein Kompartiment umfassende Mischspritze, Ampulle, Karpule, Kapsel oder dergleichen enthält bzw. darstellt, injiziert wird.

3. Verfahren nach Anspruch 1,
dadurch gekennzeichnet,
daß die Mischung in einer aus mindestens zwei Kompartimenten bestehenden Karpule durch Perforation oder ähnliche Aufhebung der Trennwirkung der Trennmembran und anschließendes Vermischen gegebenenfalls unter gleichzeitigem oder anschließendem Extrudieren erfolgt.

4. Verfahren nach Anspruch 1 und 2,
dadurch gekennzeichnet,
daß die Zufuhr der Komponenten in die Applikationseinheit mittels Dosierkolben einer Rotations- und/oder Extrusionsvorrichtung erfolgt.

5. Verfahren nach Anspruch 1,
dadurch gekennzeichnet,
daß die Komponenten getrennt in der Rotations- und / oder Extrusionsvorrichtung unter Zuführung in Dosierkammern eingebracht, hier getrennt mittels Dosierkolben dosiert und mittels Halte- und Füllröhrchen, die mit den Dosierkammern strömungsmäßig verbunden sind, in die, in/auf der Rotations- und Extrusionsvorrichtung abnehmbar angeordneten Applikationseinheit injiziert und innerhalb der Applikationseinheit gemischt werden, in dem der Austreibkolben der Applikationseinheit in den Mischraum einragende axial flexible bzw. ineinander faltbare und rotationsstabile Mischflügel aufweist und mit der Rotationseinrichtung in Drehbewegung versetzbar ist, wobei die Rotationseinrichtung den Austreibkolben in Drehbewegung und in einen, nach Abschluß der Komponenten Injektion oder Mischung, die Injizieröffnungen zum Einströmen der Komponenten in die Applikationseinheit absperrenden Aufwärtshub versetzt, während der Mischraum axial fixiert bleibt.

6. Verfahren nach Anspruch 1 und 3,
dadurch gekennzeichnet,
daß ein modifiziertes Winkel- oder Handstück zur Aufnahme von mit Abdruckmaterial und Härter exakt dosierter Mischkapseln oder Karpulen unterschiedlichen Volumens geeignet ist und den Mischvorgang in der Karpule bevorzugt über einen normalen Mikromotor der zahnärztlichen Einheit durchführt, während die Applikation der Abdruckmasse bevorzugt über eine integrierte Applikationsspitze geschieht.

7. Verfahren nach Anspruch 6,
dadurch gekennzeichnet,
daß die Mischkarpule Abdruckmaterial und Härter in getrennten Kompartimenten lagerfähig beinhaltet, die erst unmittelbar vor oder mit dem Beginn des Mischvorganges in Kontakt treten.

8. Verfahren nach Anspruch 6 und 7,
dadurch gekennzeichnet,
daß das Austreiben der Abdruckmasse aus der Karpule bevorzugt über das Winkel- oder Handstück mit einem Kolben-Vorschubmechanismus erfolgt.

9. Verfahren nach Anspruch 1 bis 8,
dadurch gekennzeichnet,
daß die Mischung der Komponenten und das Auspressen dieser in einer als Mischkörper mit Mischkammer und als Spritze ausgebildeten Applikationseinheit erfolgt, in dem der als Austreibkolben dienende Spritzenteil mit Mischelementen versehen ist und als Verbindungselement mit der Rotationseinrichtung fungiert.

10. Vorrichtung zur Durchführung des Verfahrens nach Anspruch 1,
dadurch gekennzeichnet,
daß die Vorrichtung aus mindestens einer, die das Abdruckmaterial bildenden Komponenten (3),(4) aufnehmenden Applikationseinheit (1) und einer Rotations- und / oder Extrusionseinrichtung (50) besteht, wobei die Applikationseinheit (1) mindestens einen im Mischraum höhenverfahrbaren Kolben (19), (9), oder (10) aufweist, der zum in den Mischraum einragenden Mischflügel (11) aufweist und mit der Rotationseinrichtung (50) antreibbar ausgebildet ist.

11. Vorrichtung nach Anspruch 10,
dadurch gekennzeichnet,
daß der Austreibkolben zweiteilig (9), (10) ausgebildet ist und die Komponenten mit (3), (4) mittels dieser Kolben (9), (10) innerhalb einer Karpule (2) getrennt in der Applikationseinheit (1) aufgenommen sind.

12. Vorrichtung nach Anspruch 10,
dadurch gekennzeichnet,
daß die Applikationseinheit (1) vorzugsweise zwei Einlaßöffnungen (22) zum Zwecke der Injizierung der Komponenten (3), (4) in den Mischraum der Applikationseinheit (1) aufweist.

13. Vorrichtung zur Durchführung des Verfahrens nach Anspruch 10,
dadurch gekennzeichnet,
daß diese aus einer, als Mischkörper mit Mischkammer und als Spritze ausgebildeten Applikationseinheit (1) zur Aufnahme für die in Karpulen (2) getrennten Komponenten (3,4) bzw. getrennt zuführbaren Komponenten sowie einer Extrusions- und/oder Rotationseinrichtung (50) besteht.

14. Vorrichtung nach Anspruch 13,
dadurch gekennzeichnet,
daß die Applikationseinheit (1) aus einem modifizierten bevorzugt Winkel- oder Handstück (5), einer mit Abdruckmaterial (3) oder mit Abdruckmaterial (3) und sogenanntem Härter (4) beschickten Kapsel oder Karpule (2) sowie einer Applikationsspitze (6) besteht.

15. Vorrichtung nach Anspruch 13,
dadurch gekennzeichnet,
daß der Füllraum einer Applikationseinheit (1), Ampulle, Karpule, Kapsel als Mischkammer ausgebildet ist und mit einem, mit einem Handstück/Kolbenverlängerung (17,18) oder einer Misch- und Extrusionsvorrichtung versehenen Misch- und Austreibkolben (19) versehen ist.

16. Vorrichtung nach Anspruch 13 und 15,
dadurch gekennzeichnet,
daß die Karpule (2) und / oder die Applikationseinheit (1) mit wenigstens einer Einlaßöffnung (22) versehen ist, die mittels Mischkolben (19) absperrbar ist.

17. Vorrichtung nach Anspruch 13 und 15 bis 16,
dadurch gekennzeichnet,
daß im Bereich der Einlaßöffnungen (22) in der Karpule (2) und / oder der Applikationseinheit (1) in die Öffnungen (22) einsetzbare Injizierkörper (23) in Form von Halte- und Füllröhrchen (23) vorgesehen sind, die mit Füllzylindern bzw. Kolben der Komponenten verbindbar sind.

18. Vorrichtung nach Anspruch 13 und mindestens einem der vorhergehenden Ansprüche,
dadurch gekennzeichnet,
daß die Extrusions- und / oder Rotationseinrichtung (50) eine der Anzahl der verwendeten Komponenten entsprechende Anzahl an Dosierblöcken (52) aufweist, denen die Komponenten (3),(4) jeweils zuführbar sind, wobei in den Dosierblöcken (52) Dosierzylinder bzw. Kolben (53) angeordnet sind, die innerhalb des im Dosierblock (52) vorgesehenen Dosierraum (54) höhenverfahrbar sind und der Dosierraum (54) jeweils strömungsmäßig mit einem Injizierkörper (23) in Form eines Halte- und Füllröhrchens in Verbindung stehen, deren absperrbare Austritt (56) in die Öffnungen (22) der Applikationseinheit (1) einführbar sind.

19. Vorrichtung nach Anspruch 13 und mindestens einem der vorhergehenden Ansprüche,
dadurch gekennzeichnet,
daß die Extrusions- und / oder Rotationseinrichtung (50) einen in Rotation antreibbaren Mischkolben-Mitnehmer (57) aufweist, der die Mischkolbenverlängerung (17) der Applikationseinheit (1) drehsicher aufnimmt und mittels eines, in die mit Steigung am Außenumfang eingebrachte Einfräsung (58) in Eingriffstellung bringbaren Zapfens eine vertikale Steigung während der Rotationsbewegung vornimmt.

20. Vorrichtung nach Anspruch 13 und mindestens einem der vorhergehenden Ansprüche,
dadurch gekennzeichnet,
daß die Dosierung der Komponenten (3,4) mittels dere Dosierkolbenfläche und / oder dem Kolbenhub erfolgt.

Fig.1

Fig.2

Fig.3

Fig.4

Fig.5

Fig.6

Fig.7

Fig.8

50

Fig.9

Fig.10

Fig.11

Fig.12

Fig.13

Fig.14

Fig.15

Fig.16

Fig.17

Fig.19

Fig.18

Fig.20

**Fig. 21**

Fig.22

Fig. 23

**Fig.24**

<u>50</u>

57  58  189  190  191  193

188

192

<u>Fig.</u>25

198  199  194

197  195  160  23  196  119

<u>Fig.</u>26

Fig. 27

EP 0 407 805 A1

Fig.28

Fig.29

Fig.30

Fig. 31

Fig. 32

52

207

53

208

55

54

3/4

**Fig.33**

**Fig.34**

11

209

**Fig.35**

210

11

209

210

Fig.36

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 285 110   (GRACE DEVELOPMENTS)<br>* Seite 4, Zeilen 21-30; Seite 5, Zeile 21 - Seite 6, Zeile 8; Figuren 1-2 *<br>- - - | 1,3,6-7, 10-11, 13-15,19 | A 61 C 9/00 |
| X | FR-A-2 412 475   (C. HACHE)<br>* Seite 1, Zeilen 24-30; Seite 2, Zeilen 19-29; Seite 4, Zeilen 7-22; Figuren 1-2 *<br>- - - | 1-2,4 | |
| P,X | DE-U-8 907 773   (H. SCHREIBER)<br>* Insgesamt *<br>- - - | 1,3,6-11, 13-15,19 | |
| A | DE-A-2 121 916   (J. STEMMER)<br>* Seite 2, Zeilen 1-15; Figuren 1,3 *<br>- - - | 5,8-9,12, 16,19 | |
| A | GB-A-2 064 664   (HILTI)<br>* Seite 1, Zeilen 42-51; Seite 2, Zeilen 1-18; Figur 5 *<br>- - - | 5,8-9,12, 16,18 | |
| A | EP-A-0 087 029   (H.K. SCHNEIDER)<br>* Seite 13, Zeile 33 - Seite 16, Zeile 34; Figur 3 *<br>- - - - - | 4-5, 17-18,20 | |

RECHERCHIERTE SACHGEBIETE (Int. Cl.5)

A 61 C
B 05 C

Der vorliegende Recherchenbericht wurde für alle Patentansprüche erstellt

| Recherchenort | Abschlußdatum der Recherche | Prüfer |
|---|---|---|
| Den Haag | 01 Oktober 90 | NICE P.R. |